Europäisches Patentamt

European Patent Office

Office européen des brevets

(11) Publication number: **0 404 236**
**A1**

## (12) EUROPEAN PATENT APPLICATION

(21) Application number: **90201552.8**

(22) Date of filing: **15.06.90**

(51) Int. Cl.⁵: **H04N 1/40**

(30) Priority: **21.06.89 NL 8901555**

(43) Date of publication of application:
**27.12.90 Bulletin 90/52**

(84) Designated Contracting States:
**DE FR GB NL**

(71) Applicant: **Océ-Nederland B.V.**
**St. Urbanusweg 43**
**NL-5914 CC Venlo(NL)**

(72) Inventor: **Oyen, Johannes Paulus Hubertus**
**Graaf Wolff Metternichlaan 14**
**NL-6071 BL Swalmen(NL)**
Inventor: **Geraedts, Johannes Mathilda Peter**
**Steeg 28**
**NL-5944 BV Arcen(NL)**

(74) Representative: **Hanneman, Henri W.A.M. et al**
**Océ-Nederland B.V. Patents and Information**
**Postbus 101**
**NL-5900 MA Venlo(NL)**

(54) **Image segmentation method and device.**

(57) A method and device for distinguishing character and photograph areas on a document, in which a series of image signals obtained by photoelectrically scanning a document line by line and each image signal corresponding to the optical density information of an image dot on the documents, is fed to a segmentation device in which character and photograph areas are distinguished from one another, the series of image signals being devided up into a number of groups before being fed to the segmentation device, there being determined for each group one new image signal corresponding to the average of the image signals in that group.

EP 0 404 236 A1

## Image segmentation method and device

The invention relates to a method of distinguishing character and photograph areas on a document, in which method a series of image signals obtained by photoelectrically scanning a document line by line and each image signal corresponding to the optical density information of an image dot on the document, is fed to a segmentation device in which character and photograph areas are distinghuished from one another, and to an image processing device for processing image signals obtained by sequentially photoelectrically scanning character and photograph areas on a document, comprising:

- a scan bit map memory in which the image signals obtained on scanning are stored digitally,

- a conversion device to which the digitally stored image signals are fed and in which said image signals are converted both to a raster image and to a threshold image,

- an analyzer device connected to the scan bit map memory, comprising a segmentation device for distinguishing image signals originating from character areas and image signals originating from photograph areas, and for generating switching signals corresponding thereto,

- a switching device to which the raster image and the threshold image are fed and which, in dependence on the corresponding switching signals, feeds part of one of the two images to a printing device each time.

A method and device of this kind are used in an electronic copier, in an optical character recognition system or in a data compression system. A document (an original) is scanned by means of a scanner which generally uses a CCD as an image sensor. The 'scanner repeatedly scans a small strip of the document. A CCD with 4000 image sensors thus scans a series of 4000 image dots or pixels, each image dot with its specific grey value being converted to an analog signal whose size is related to the associated grey value. The 4000 image dots are then fed serially to an A/D converter which converts the grey value of each image dot into a digital signal which for further processing is stored in a bit map memory. A printing device, e.g. a laser printer, can generally print only two grey values, i.e. white and black. The bit map of the scanned document, however, may contain 256 grey values for example per pixel. Accordingly, the bit map will have to be so processed that the printed end result contains sufficient grey values despite the limited grey value resolution of the laser printer. A document contains all kinds of information, e.g. characters, coarse rasters, line drawings, photographs, fine rasters, and so on. Simple thresholding is adequate for reproducing characters, very coarse rasters and line drawings with a two-level printing system. For this purpose the image signals are fed to a comparison circuit and compared with a reference signal corresponding to a light grey level. All the image signals originating from image dots having a higher grey level are converted to a logic 1, and the white parts or background to a logic 0.

Photographs or fine rasters, however, cannot be printed by thresholding; the system has too harsh an effect. Dithering is a method frequently used to enable grey values to be reproduced with a two-level printer. In this each image dot on the print is reproduced by, for example, a 4 x 4 matrix, in which a number of dots is made black in accordance with the original grey value, so that 16 grey tints can be reproduced on the print. Dithering, however, is not suitable for reproducing characters, line drawings or coarse rasters. This would lead to unsharp black-white transitions. Since a document frequently contains both character and photograph information, these character and photograph areas should be distinghuished from one another in the bit map to enable them to be reproduced in different ways in the printer.

The term "character areas" is used to denote areas in which letters, line drawings or coarse rasters (< approximately 40 line pairs per cm) occur and the term "photograph areas" denotes areas in which photographs (analog grey values) or very fine rasters (> approximately 40 line pairs per cm) occur.

Separating a document into character and photograph areas is termed image segmentation.

One known method of automatically segmenting documents is based on the fact that character areas can be characterised as dark objects on a very light background. A search is made systematically for white backgrounds having an OD below a specific value. In concrete terms this is done by checking, for each pixel in a cruciform area having the pixel as the centre pixel, whether one pixel in said cruciform area has an OD below a (low) threshold. If that is the case, the centre pixel is identified as a character area. These very low OD's will usually not occur in photograph areas. In addition, these areas should have a specific minimum size.

A disadvantage of this known method is that with high scanning system resolutions it is no longer possible for fine rasters to be completely identified as photograph areas and hence they are reproduced thresholded.

The object of this invention is to obviate this and other disadvantages.

According to the invention, this object is attained in a method according to the preamble in that before being fed to the segmentation device the series of image signals is divided up into a number of groups, there being determined for each group one new image signal corresponding to the average of the image signals in that group. In an image processing device according to the preamble, this object is attained in that the analyzer device comprises a reduction device in which a group of image signals is combined each time to form a new image signal corresponding to the average of the image signals in that group, and in that said new image signals are fed to the segmentation device.

Consequently, fine rasters flow into one another and no longer show any black/white transitions. The number of image signals to be processed is also greatly limited, so that fast segmentation can take place.

These and other advantages will be apparent from the following description by reference to a nubmer of drawings in which:

Fig. 1 shows the relationship between the processes for scanning, processing and recording a document according to the method of the invention,

Fig. 2 shows an image processing device according to the invention,

Fig. 3 shows an area to which segmentation analysis is applied, and

Fig. 4 shows an application of the area from Fig. 3.

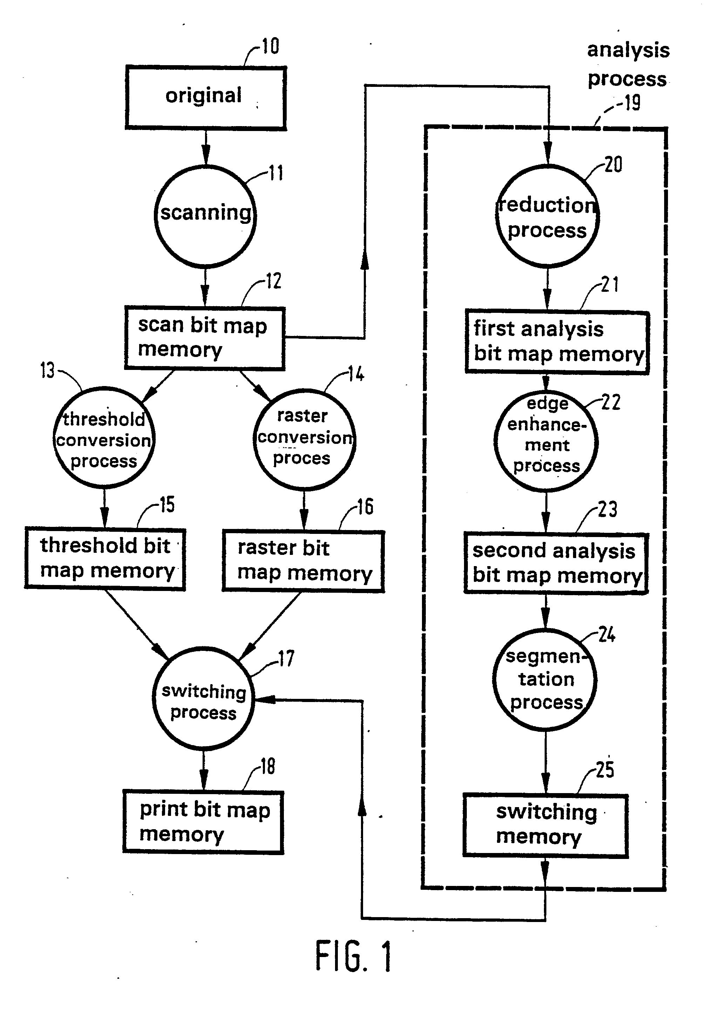

Fig. 1 diagrammatically represents the processes which take place in a scanning, processing and recording system. An original 10 is photoelectrically scanned 11 by means of a CCD array having a resolution of 400 dpi (dots or pixels per inch). The resulting analog image signals are converted by an A/D converter to digital image signals. 256 grey tints can be formed in this way per image dot, so that 8-bits are required to determine each image dot with its grey value. These 8-bits image signals are fed to a scan bit map memory 12 and stored therein. 128 scanned image lines are stored in this scan bit map memory 12. Each image line comprises 4096 image signals so that a memory of 4096 x 8 bits is required per image line.

The digital 8-bit image signals are then converted to 1-bit image signals by a threshold conversion process 13. For this purpose, the 8-bit image signals are compared with a threshold signal. This threshold signal is situated approximately in the middle of the maximum and minimum OD of the original.

All the image signals having a value greater than this threshold are converted to a logic 1 in the threshold conversion process 13 and all the image signals having a value less than this threshold are converted to a logic 0. The results of this conversion are stored in the threshold bit map memory 15. The latter also offers space for 128 image lines, while 4096 x 1 bit memory is required for one image line.

By means of a raster conversion process 14 the digital 8-bit image signals are also converted to raster image signals. The 8-bit image signals which can represent 256 grey tints are converted to 17 grey tints which can then be converted by known dither techniques to 17 different fillings-in of a matrix of 4 x 4. Depending on the required grey tint, one or more elements are filled in with an image dot in the 4 x 4 matrix. The image lines thus converted (128 of them) are stored in the raster bit map memory 16.

For the actual image segmentation, the 8-bit image signals are subjected to an analysis process 19. The character and photograph areas should be distinghuished from one another therein.

To this end, according to the invention the 8-bit image signals are first subjected to a reduction process 20. The image signals obtained with a resolution of 400 dpi by scanning the original 10 are converted to new image signals originating from two consecutive image dots of a first image line combined with the image signals originating from two consecutive image dots of a second image line. The image dots of tne two image lines are situated exactly one above the other on the original, so that 2 x 2 image dots are repeatedly combined to form a group. The image signals representing these image dots and each representing a specific grey tint are digitally summated and the sum is digitally divided by four. The result of this is a new image dot having a grey value which is the average of the grey value of the four image dots under consideration.

The new image lines thus obtained are fed to a first analysis bit map memory 21 and are stored therein. The quantity of data in this memory 21 is one-quarter of the original quantity of data in the scan bit map memory 12. As a result of this reduction process 20, the fine raster dots obtained from scanning are to some extent smoothed out so that no sharp black/white transitions remain. An additional advantage is that the quantity of data with which the segmentation is determined in the analysis process has decreased by a factor of four, so that faster operation of the process is obtained with less memory use.

Because the edges of the coarse rasters and other characters are also smoothed out somewhat, the image signals from the first analysis bit map memory 21 are subjected to an edge enhancement process 22. Numerous methods are known for this and the process will not be described further. The characters, line rasters and coarse rasters again have sharp black/white transitions as a result, while photographs and fine rasters are not appreciably altered by this process.

The result of this operation is stored in a second analysis bit map memory 23. These signals are then subjected to the segmentation process 24. The latter is based on searching a white image dot or substantially white according to the background of the original concerned) in the immediate vicinity of an image dot. In the case of letters, line rasters and coarse rasters, sharp black/white transitions will occur so that white areas also occur in the immediate vicinity of a black image dot when the latter is detected. If this condition is satisfied for an image dot, then that image dot is allocated a character label.

Photograph areas such as analog photographs or fine rasters smoothed out by means of the reduction process 20 will have many less sharp black/white transitions, if any. Image dots which satisfy this condition are allocated a photograph label.

All the image signals from the second analysis bit mamp memory 23 are processed in this way and the results are stored in the switching memory 25. The latter thus contains the information for the first 128 image lines as to what areas are character areas and what areas are photograph areas.

The signals from the threshold bit map memory 15 and from the raster bit map memory 16 are subjected to a switching process in synchronism with the signals from the switching memory 25. If the signal from the switching memory 25 indicates that a character area has been found, then the signals associated with that area will be fed from the threshold bit map memory 15 to a print bit map memory 18 via the switching process 17.

If the signal from the switching memory 25 indicates that a photograph area has been found, then the signals associated with that area will be fed from the raster bit map memory 16 to the print bit map memory 18 via the switching process 17.

In this way, a ONES en ZEROS pattern forms in the print bit map memory 18 for character areas, so that sharp black/white images can be formed in these areas, while for photograph areas the dither matrices corresponding to the original grey values are stored in the print bit map memory 18 so that dithered grey tints can be formed on the print.

Depending upon the connected printing device it may be necessary first to invert the signals stored in the print bit map memory 18 before they are fed to the printing device.

For explanatory purposes, the above processes have been described as substantially static processes applied to 128 image lines obtained by scanning. In actual fact, however, they are dynamic processes. An original is taken past a CCD scanning device at a uniform speed, a new image line being scanned each time, the image signals thereof being fed line by line to the scan bit map memory 12. If, for example, image line 129 is scanned and converted to image signals fed to the scan bit map memory 12, then the first scanned image line will already have been completely finished and removed from the scan bit map memory. The processing takes place over an area of 128 image lines which moves like a window, as it were, over the original to be scanned.

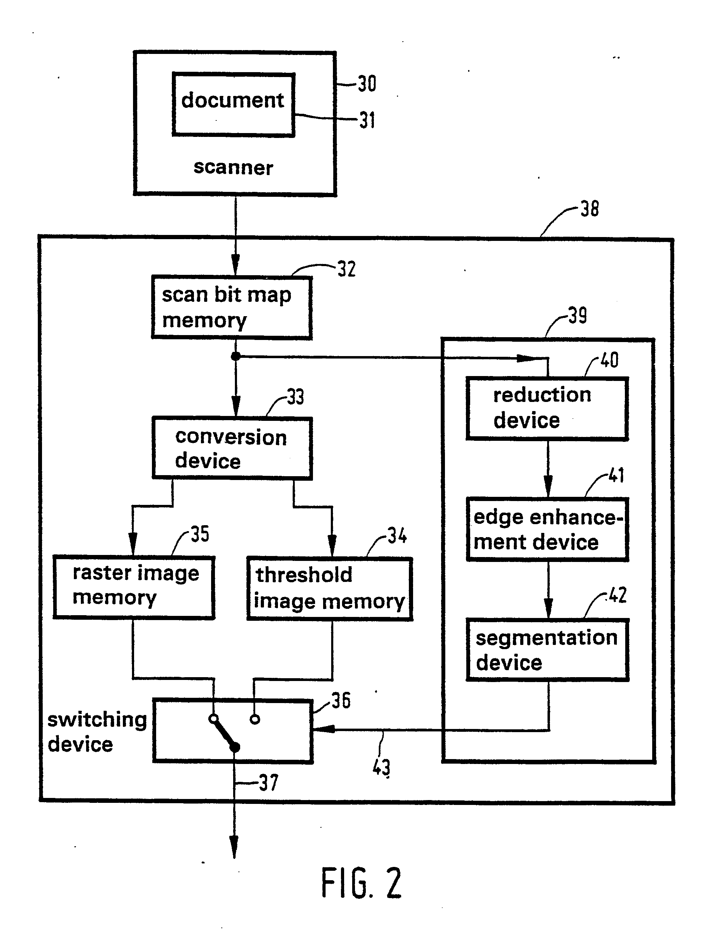

Fig. 2 diagrammatically represents an image processing device 38 according to the invention. A document 31 provided with character and photograph areas is photoelectrically scanned in a scanner 30 by means of a CCD array of 4096 light-sensitive elements. For this purpose the document 31 is fed at a constant speed past the CCD array. The integrated light values corresponding to the OD values of the image dots in an image line are serially ejected and fed via an A/D converter to the image processing device 38. The digital image signals of an image line are stored in a scan bit map memory 32. It is possible to store 128 image lines in this memory 32, each image line occupying 4096 x 8-bits. These image signals are fed line by line to a conversion device 33 and an analyzer device 39. The threshold conversion process 13 and the raster conversion process 14 described with reference to Fig. 1 take place in the conversion device 33. The raster image or dither image obtained is stored in memory 35 and the threshold image obtained is stored in memory 34. Both images are fed to a switching device 36.

In the analyzer device 39 the image signals are first combined in groups in the reduction device 40, a new image signal being formed from each group, the size of the new image signal corresponding to the average of the image signals in that group. The resulting new image signals are then processed in an edge enhancement device 41, the black/white transitions in character areas particularly becoming steeper.

These signals are given a character label or a photograph label in the segmentation device 42 in accordance with the segmentation process described, and from this a switching signal is derived. If an area is labelled a photograph area, the corresponding switching signal will so switch the switching device 36 via line 43 that the raster image associated with that area will be fed to the printing device via line 37. If an area is labelled a character area, the switching signal associated therewith will so switch the switching device 36 via line 43 that the threshold image associated with that area is fed to the printing device via line 37.

To obtain synchronism in the processes in the image processing device 38, the various devices 33, 36, 40, 41, 42 and memories or buffers 32, 34, 35 are connected to a synchronization device (not shown). For this purpose, the reduction device 40, the edge enhancement device 41 and the segmentation device 42 each comprise a bit map buffer memory. For real-time processing the various devices are constructed in hardware, but it is also possible to use a microcomputer for this image processing device, the computer being provided with one memory in which the various bit maps are stored.

The character and photograph signals obtained in the segmentation device 42 and representing character and photograph areas can be further processed in known manner by means of a number of context rules, as described fore example in European patent application 88201987.0

If the scanner 30 scans the originals with a higher resolution (e.g. 600 dpi), then more image signals (9 in this example) will be combined into a group in the reduction device 40, so that the fine rasters are again smoothed out to no-longer recognizable black-white dots and hence to photograph areas.

For segmentation in accordance with the method described, for the labelling of an image dot it is necessary to analyze the immediate vicinity of that image dot.

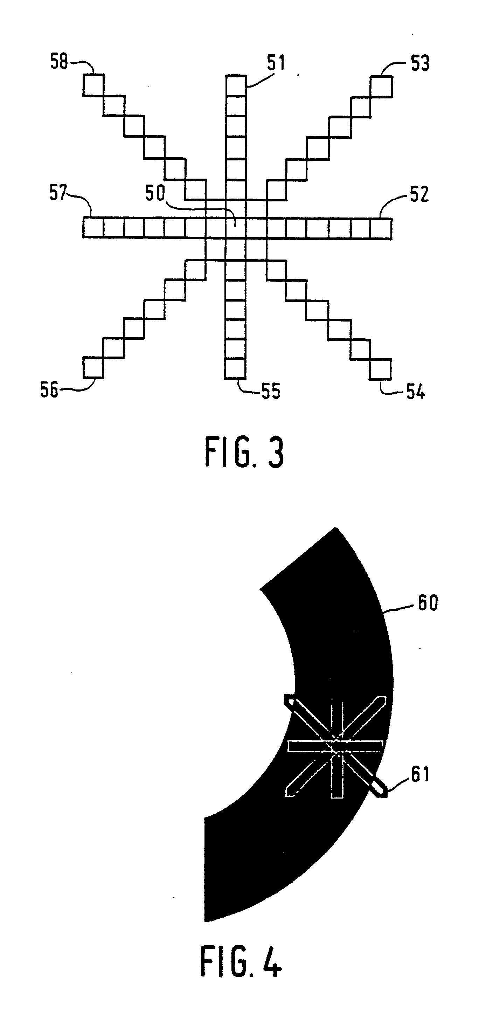

Fig. 3 shows an image dot 50 to be processed (centre pixel) with the image dots to be analysed which are counted as being in the immediate vicinity of this centre pixel. According to the invention there are eight rows of image dots extending star-fashion around the centre pixel and forming an angle of 45° to one another in each case. In this way there form two horizontal rows 52, 57, two vertical rows 51, 55 and four diagonal rows 53, 54, 56 and 58 of each seven image dots. The star-shaped structure offers extra facilities as compared with, for example, a cruciform structure, insofar as concerns recognition of character areas in the case of non-straight letters.

Fig. 4 shows this in greater detail. A star-shaped area 61 is projected on to a part of a letter 60. The centre pixel of the star 61 lies on the letter and some image dots of the diagonal rows lie above the white (background) area, so that the segmentation device allocates this centre pixel a character label. If a cross would be used instead of a star, with only vertical and horizontal rows, the segmentation device would allocate a photograph label to this centre pixel and this centre pixel would be reproduced in dithered form on the print.

It is clear that the size of the immediate vicinity of a centre pixel (Fig. 4) influences the final result of segmentation. It has been found that if the area to be analysed measured on the original occupies approximately 2 x 2 mm optimum segmentation is obtained. By analyzing not all the possible image dots in that area but only those which are in the star shown in Fig. 4, a data reduction of a factor of four is obtained for processing so that the processing speed will increase.

The invention is not limited to the methods and devices described. The skilled addressee will therefore be able to apply numerous modifications, all of which, however, will come under the following claims.

**Claims**

1. A method of distinguishing character and photograph areas on a document, in which method a series of image signals obtained by photoelectrically scanning a document line by line and each image signal corresponding to the optical density information of an image dot on the document, is fed to a segmentation device in which character and photograph areas are distinguished from one another, characterised in that before being fed to the segmentation device (42) the series of image signals is divided up into a number of groups, there being determined for each group one new image signal corresponding to the average of the image signals in that group.

2. A method according to claim 1, characterised in that the new image signals are subjected to an image enhancement process (22).

3. A method according to claim 1 or 2, in which the image signals of a number of image lines are stored in a segmentation bit map memory, and in which in order to evaluate whether an image signal belongs to a character or a photograph area consideration is given to those image signals which originate from image dots extending in the immediate vicinity of the image dot under consideration on the document, characterised in that the immediate vicinity is formed by a number of rows of image dots of a specific length extending star-fashion around the image dot under consideration, the term "star fashion" denoting eight rows forming an angle of 45° to one another.

4. A method according to claim 3, characterised in that the immediate vicinity covers an area on the document of a size of about 2 x 2 mm.

5. An image processing device for processing image signals obtained by sequentially photoelectrically scanning character and photograph areas on a document, comprising:
- a scan bit map memory (32) in which the image signals obtained on scanning are stored digitally,
- a conversion device (33) to which the digitally stored image signals are fed and in which said image signals are converted both to a raster image and to a threshold image,

- an analyzer device (39) connected to the scan bit map memory (32), comprising a segmentation device (42) for distinguishing image signals originating from character areas and image signals originating from photograph areas, and for generating switching signals corresponding thereto,

- a switching device (36) to which the raster image and the threshold image are fed and which, in dependence on the corresponding switching signals, feeds part of one of the two images to a printing device each time, characterised in that the analyzer device (39) comprises a reduction device {40) in which a group of image signals is combined each time to form a new image signal corresponding to the average of the image signals in that group, and in that said new image signals are fed to the segmentation device (42).

6. An image processing device according to claim 5, characterised in that an edge enhancement device (41) is disposed between the analyzer device (39) and the segmentation device (42).

7. An image processing device according to claim 5 or 6, characterised in that the reduction device (40) repeatedly forms a new image signal from a group of digital image signals originating from a number of image dots on the document occupying an area of about 0.13 x 0.13 mm.

8. A method of distinguishing character and photograph areas on a document in a scanning, processing and recording device, comprising the following steps:

a) photoelectric scanning (11) of character and photograph areas on an original document (10),

b) storage of the digital image signals obtained from the scan in a scan bit map memory (12),

c) conversion of these digital image signals by means of a raster conversion process (14) to a rastered image and storage thereof in a raster bit map memory (16),

d) conversion of the digital image signals by means of a threshold conversion process (13) to a thresholded image and storage thereof in a threshold bit map memory (15),

e) subjecting the digital image signals to an analysis process (19) in which, by means of a segmentation process (24), the photograph areas and the character areas are distinguished from one another and in which a switching signal is stored in a switching memory (25) on each transition between these areas,

f) reading out of the rastered image stored in the raster bit map memory (16) and of the threshold image stored in the threshold bit map memory (15) in synchronization with reading out of the switching signals stored in the switching memory (25), part of the rastered image or a part of the thresholded image being fed each time to a printing device in dependence on the switching signal, characterised in that the analysis process (19) comprises a reduction process (20) in which a group of digital image signals is combined each time to form a new digital image signal that corresponds to the average of the image signals of that group and subsequently is subjected to the segmentation process (24).

9. A method according to claim 8, characterised in that the analysis process (19) comprises an edge enhancement process (22) to which the new digital image signals are subjected before being subjected to the segmentation process (24).

10. An image processing device for performing a method according to claim 8 or 9.

FIG. 1

FIG. 2

FIG. 3

FIG. 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 202 425 (IBM)<br>* Claim 1; figure 1 *<br>--- | 1 | H 04 N 1/40 |
| Y | WO-A-8 903 150 (EASTMAN KODAK)<br>* Abstract *<br>--- | 1,5,8 | |
| Y | DE-A-3 446 880 (CANON)<br>* Page 15, line 1 - page 21, line 2 *<br>--- | 1,5,8 | |
| A | EP-A-0 223 601 (SHARP)<br>* Abstract; page 1, lines 7-15; claim 3 *<br>--- | 1,2,5,6,8-10 | |
| A | GB-A-2 170 372 (CANON)<br>* Column 1, lines 78-121; column 3, lines 76-90 *<br>--- | 1-4 | |
| A | EP-A-0 100 811 (IBM)<br>* Page 3, lines 12-28; page 34, lines 10-14; page 35, lines 13-17 *<br>----- | 1-4 | |
| | | | TECHNICAL FIELDS SEARCHED (Int. Cl.5)<br><br>H 04 N |

The present search report has been drawn up for all claims

| Place of search | Date of completion of the search | Examiner |
|---|---|---|
| THE HAGUE | 10-09-1990 | GREVE M.P. |